Europäisches Patentamt

(19) European Patent Office

Office européen des brevets

(11) Publication number: **0 233 533**
**B1**

(12) **EUROPEAN PATENT SPECIFICATION**

(45) Date of publication of the patent specification:
14.11.90

(21) Application number: **87101384.3**

(22) Date of filing: **02.02.87**

(51) Int. Cl.⁵: **E21B 43/22**

(54) Mobility control reagents with superior thermal stability.

(30) Priority: **18.02.86 US 829900**
**05.03.86 US 836664**

(43) Date of publication of application:
**26.08.87 Bulletin 87/35**

(45) Publication of the grant of the patent:
**14.11.90 Bulletin 90/46**

(84) Designated Contracting States:
**AT BE CH DE ES FR GB GR IT LI NL SE**

(56) References cited:
**EP-A- 0 094 898**
**EP-A- 0 165 425**
**US-A- 3 679 000**
**US-A- 3 858 652**
**US-A- 4 404 111**

(73) Proprietor: **AMERICAN CYANAMID COMPANY,**
**1937 West Main Street P.O. Box 60, Stamford**
**Connecticut 06904-0060(US)**

(72) Inventor: **Ryles, Roderick Glyn, 96 Wendy Road, Milford**
**Connecticut 06460(US)**

(74) Representative: **Wächtershäuser, Günter, Dr., Tal 29,**
**D-8000 München 2(DE)**

ACTORUM AG

**Description**

BACKGROUND OF THE INVENTION

U.S. Patent Nos. 3,679,000; 3,692,673; 3,858,652; 3,945,929; 3,948,783; 3,953,341; 3,953,342; 4,309,523; 4,326,970; 4,395,340; 4,404,111; 4,409,110; 4,439,334; 4,515,635; 4,555,269; and European Published Application Nos. 0094898 and 0115836 disclose the use of various N-sulfohydrocarbon substituted acrylamide homopolymers and copolymers for controlling the viscosity of aqueous media used in water-flooding operations for enhanced petroleum recovery. The copolymers are described as containing 5-95%, by weight, of the N-sulfohydrocarbon-substituted acrylamide, preferably 50-95%, by weight, and even more preferably 70-95%, by weight. Comonomers such as acrylic monomers e.g. acrylic or methacrylic acid or salts, acrylamide, methacrylamide etc., are taught. Additionally, U.S. Patent No. 4,573,533 discloses the use of analogous polymers as mobility control reagents under harsh conditions and in the absence of oxygen.

While most of the polymers discussed above and other commercially used polymers such as acrylamide-ammonium acrylate copolymers and polysaccharides have usually proven to be effective for the control of the viscosity of aqueous media, in many instances, the viscosity of the copolymers or material breaks down when the temperature of the well interior at the petroleum bearing deposit reaches above about 90°C i.e. preferably about 100°C-120°C or, alternatively, when prepared and/or used in the presence of oxygen, or both. Furthermore, the presence of polyvalent metal ions in the water already present in the wells or in that used to flood the wells during the enhanced oil recovery also tends to participate in the degradation of the copolymers and other materials which are added thereto. Such polyvalent metal ions are normally found in hard waters.

It therefore would solve a long-felt need if a method could be discovered for treating wells which exhibit temperatures above about 90°C i.e., those preferably ranging from about 100°C to about 120°C, during secondary oil recovery, especially in the presence of mineral water containing polyvalent salts without the substantial accompanying break-down of polymer viscosity.

SUMMARY OF THE INVENTION

It has now been found that the viscosity degradation exhibited by many of 2-acrylamido-2-methylpropane-sulfonic acid (AMMPS) polymers used in enhanced oil recovery, caused by the presence of high temperatures and/or polyvalent salt-containing water which is either present in the subterranean petroleum-bearing deposits or which is used to form the polymer solution per se which is injected into the well is not experienced by homopolymers of 2-acrylamido-2-methylpropane sulfonic acid or its salts or copolymers thereof with N,N-dimethylacrylamide during and after the injection of the water solution thereof under anaerobic conditions.

DESCRIPTION OF THE INVENTION INCLUDING PREFERRED EMBODIMENTS

The present invention refers to a method for recovering petroleum from a subterranean petroleum-bearing deposit wherein a viscous polymer solution of a homopolymer of AMMPS or a copolymer thereof with N,N-dimethylacrylamide is injected into the area of said deposit through at least one input well to cause said petroleum to flow from said area for collection through at least one output well. The present improvement comprises controlling and maintaining the viscosity of the homopolymer or copolymer solution by utilizing the homopolymer or copolymer in solution and in the substantial absence of oxygen, i.e., under anaerobic conditions, the temperature at the petroleum-bearing deposit being at least 90°C, preferably from about 100°C to about 120°C, and even more preferably from about 110°-120°C.

As mentioned above, the viscosity of the water solution of the homopolmeric AMMPS or the copolymer of AMMPS and N,N-dimethylacrylamide which is injected into the input well is maintained substantially constant over the period of time required to force the petroleum out of the deposits and into the output well. The presence of polyvalent salts and/or the temperature of the deposits, which usually contributes significantly to the viscosity breakdown of other polymers, do not materially affect the polymers used herein especially when the polymer is maintained and used under anaerobic conditions.

Although the use of fresh water for the water-flooding of subterranean deposits and the preparation of polymer solutions used for such purpose has been employed in the past, it is of course, from an economical standpoint, preferred to use mineral-containing waters therefor. The present invention encompasses the use of such fresh water or mineral-containing waters having a polyvalent ion concentration of at least 100 ppm, preferably at least 500 ppm for preparation of the polymeric solution. The polyvalent ions usually are present in such water in the form of calcium iron and magnesium salts alone or in conjunction with sodium salts. Alternatively, of course, fresh water solutions of the polymer can be injected into wells which already contain polyvalent salt containing waters.

The homopolymers useful in the instant process employ 2-acrylamido-2-methylpropanesulfonic acid (AMMPS) or a salt thereof and the copolymers employ AMMPS or a salt thereof and N,N-dimethylacrylamide. The salts of the AMMPS monomer are usually alkali metal or ammonium salts with sodium and potassium salts being preferred. The copolymers may contain a mole ratio of from about 20-99%, of the AMMPS and correspondingly, from about 1-80%, of the N,N-dimethylacrylamide. Up to about 10% of the above comonomers may be replaced by a third monomer such as acrylonitrile, methyl methacrylate, acrylic acid, vinyl chloride and the like.

The polymers may be prepared by any known method such as bulk, solution, suspension in emulsion so long as the polymerization is conducted in the absence of oxygen and the resultant polymer is maintained and used under a substantially oxygen-free atmosphere. The molecular weight of the polymer should be at least about 500,000, preferably at least about 1,000,000.

By the terms "in the substantial absence of oxygen" or "under anaerobic conditions" etc., as used herein, is meant that from the point where the polymer is added to the water, through the oil well pipeline and to the subterranean strata, the presence of oxygen is maintained at a minimum, i.e. <1ppm. The polymer itself should also be prepared and stored under conditions conducive to oxygen elimination. The elimination of the oxygen can be accomplished by the use of oxygen scavengers such as sodium dithionite, sodium metabisulfite etc., by the use of an inert gas sparge such as nitrogen, argon etc., and the like.

The most pertinent of the above-disclosed references with regard to the instant copolymers is EPO published application 0115836. This application teaches various sodium AMMPS copolymers of N,N-dimethylacrylamide. In Tables XXXV and XLIV, the results of testing copolymers containing a mole ratio 50-60% of N,N-dimethylacrylamide and 40-50% of AMMPS for viscosity stability in the presence of sea water at 250°F (121°C) are presented. The tests described in the application are all conducted on solutions which were aged for only seven days. Such short duration tests do not predict long term longevity and may result in misleading conclusions. Since polymer flooding operations are normally conducted over many months or even years, water-soluble polymers which are used as mobility control reagents must be stable to reservoir conditions over the same period of time. The EPO application shows relatively poor to moderate stability over a very short time scale of aging. It is believed that these results are less positive because of the presence of oxygen during the manufacture and/or testing of the polymers.

The following examples are set forth for purposes of illustration only and are not to be construed as limitations on the present invention except as set forth in the appended claims. All parts and percentages are by weight unless otherwise specified.

In the following examples, polymer solutions are prepared by dissolution in distilled water, normally 2 hours for dry and liquid polymers and about 16 hours for gel polymers. Salt is added and the solution is then filtered through a 150 mesh stainless steel screen. The composition of the brine is as follows:

9.0% NaCl
1.0% $CaCl_2$

The composition of the synthetic sea water is as follows:

2.3% NaCl
0.13% $Na_2SO_4$
0.53% $MgCl_2$
0.11% $CaCl_2$

Test solutions are essentially free from dissolved oxygen and are aged at controlled elevated temperature by the procedure described in Society of Petroleum Engineers, Paper No. 12 008; "Thermal Stability Testing of Mobility Control Reagents".

The copolymer concentration in all examples is 2500 ppm.

The viscosity of the polymers in all examples is measured by use of a Brookfield Viscometer fitted with a UL adaptor at 25°C. The Viscosity Ratio %(VR%) is defined as the Brookfield Viscosity (12 r.p.m.) after 4 days of aging divided by the initial viscosity.

## ANAEROBIC TEST METHOD

Conditions close to the anaerobic are achieved by aging solutions in a sealed glass ampoule. Several ampoules are attached to a manifold for loading with test solution at a single time. Each solution is purged with nitrogen (< 25 ppm oxygen) for at least one hour before the ampoules are filled. A gas reservoir is attached to the manifold and vacant ampoules are successfully evacuated to 13.3 Pa (=.1 mmHg) and then filled with nitrogen three times. With the whole assembly under a positive nitrogen atmosphere, each ampoule is one half filled with test solution. The reservoir is evacuated to 13.3 Pa (0.1 mmHg) and isolated from the vacuum source. All gases dissolved in the test solutions removed following a nine cycle procedure. Ampoules are then flame-sealed and aged at the designated temperature.

## EXAMPLES 1–7

Following the test method described above; various copolymer solutions, in brine at 90°C & 120°C, are tested for viscosity maintenance. As can be seen from Table 1, below, the copolymers of AMMPS and N,N-dimethylacrylamide (DMA) retain their viscosity over a very long period of time, i.e., up to 161 days.

## TABLE I

| Example | MOLE % | | STABILITY | | | |
|---|---|---|---|---|---|---|
| | AMMPS | DMA | 90°C | | 120°C | |
| | | | DAYS | VR% | DAYS | VR% |
| 1 | 20 | 80 | 0 | 100 | 0 | 100 |
| | | | 14 | 89 | 14 | 85 |
| | | | 56 | 49 | 56 | 54 |
| | | | 150 | 85 | 150 | 55 |
| | | | | | 161 | 53 |
| 2 | 30 | 70 | 0 | 100 | 0 | 100 |
| | | | 14 | 85 | 14 | 136 |
| | | | 56 | 89 | 56 | 88 |
| | | | 149 | 142 | 149 | 85 |
| 3 | 40 | 60 | 0 | 100 | 0 | 100 |
| | | | 14 | 75 | 14 | 74 |
| | | | 56 | 80 | 55 | 71 |
| | | | 159 | 75 | 159 | 56 |
| 4 | 50 | 50 | 0 | 100 | 0 | 100 |
| | | | 14 | 85 | 14 | 73 |
| | | | 54 | 82 | 56 | 64 |
| | | | 147 | 82 | 120 | 59 |
| 5 | 60 | 40 | 0 | 100 | 0 | 100 |
| | | | 14 | 82 | 14 | 73 |
| | | | 56 | 60 | 56 | 62 |
| | | | 146 | 80 | 145 | 59 |
| 6 | 70 | 30 | 0 | 100 | 0 | 100 |
| | | | 14 | 92 | 14 | 91 |
| | | | 56 | 88 | 56 | 82 |
| | | | 145 | 88 | 145 | 83 |
| 7 | 80 | 20 | 0 | 100 | 0 | 100 |
| | | | 14 | 93 | 14 | 89 |
| | | | 56 | 91 | 56 | 92 |
| | | | 137 | 91 | 137 | * |

* = equals that of water

EXAMPLES 8 & 9

The procedure of Examples 1–7 is repeated except that the test results are conducted at 150°C. The results are set forth in Table II, below.

4

## TABLE II

| Example | Mole % | | Stability at 150°C | |
|---|---|---|---|---|
| | AMMPS | DMA | DAYS | VR% |
| 8 | 20 | 80 | 0 | 100 |
| | | | 14 | 45 |
| | | | 19 | 43 |
| | | | 35 | 36 |
| | | | 43 | 36 |
| 9 | 80 | 20 | 0 | 100 |
| | | | 14 | 83 |
| | | | 63 | 69 |
| | | | 117 | * |

\* = equals that of water

EXAMPLE 10 (comparative)

The procedure of Examples 1–7 is again followed except that the copolymer is composed of 70 mole% AMMPS and 30 mole% acrylamide. After 0, 17 and 56 days the VR% is 100, 57, 0 (i.e., that of water), respectively at 120°C.

EXAMPLES 11–16 (comparative)

Again following the procedure of Examples 1–7 except that the AMMPS is replaced by sodium acrylate (SA), the results set forth in Table II, below, are achieved.

## TABLE III

| Example | MOLE % | | STABILITY | | | |
|---|---|---|---|---|---|---|
| | DMA | SA | 90°C | | 120°C | |
| | | | DAYS | VR% | DAYS | VR% |
| 11 | 95 | 5 | 0 | 100 | 0 | 100 |
| | | | 15 | 128 | 14 | 57* |
| | | | 56 | 102 | 42 | ** |
| 12 | 90 | 10 | 0 | 100 | 0 | 100 |
| | | | 15 | 99 | 14 | 29* |
| | | | 56 | 66 | | |
| 13 | 80 | 20 | 0 | 100 | 0 | 100 |
| | | | 14 | 191 | 14 | ** |
| | | | 56 | gel | | |
| 14 | 70 | 30 | 0 | 100 | 0 | 100 |
| | | | 14 | 107 | 14 | ** |
| | | | 55 | gel | | |
| 15 | 60 | 40 | 0 | 100 | 0 | 100 |
| | | | 14 | 104 | 14 | ** |
| | | | 54 | gel | | |
| 16 | 50 | 50 | 0 | 100 | 0 | 100 |
| | | | 14 | gel | 14 | ** |

** = equal to water/precipitate

* = precipitate

6

## EXAMPLE 20

Following the test method described above-various polymer solutions, in harsh water* at 90°C, are tested for viscosity maintenance. As can be seen from Table IV, below, solutions of copolymers, containing 50, 70 and 90 mole percent of AMMPS, the remaining being acrylamide (AM), exhibit a breakdown in viscosity after 56-294 days at 100°C-120°C whereas AMMPS homopolymer retains viscosity at 120°C. Comparisons with Xanthan and anionic polyacrylamide (PAM) are also shown.

*water contains 9% NaCl and 1% CaCl₂.

TABLE IV

| EXAMPLE | POLYMER | POLYMER CONC. ppm | TEMP. | DAYS | Visc. mPaS 60 | 30 | 12 | 6 rpm |
|---|---|---|---|---|---|---|---|---|
| 20C | Xanthan | 1000 | 70°C | 0 | 7.73 | 10.3 | – | – |
| | | | | 13 | 2.63 | – | – | – |
| | | | | 32 | 1.26 | – | – | – |
| 21C | Anionic PAM | 2000 | 90°C | 0 | 9.07 | 9.8 | – | – |
| | | | | 14 | 5.21 | 5.4 | – | – |
| | | | | 28 | 2.58 | – | – | – |
| 22C | 50/50 MOLE % AMMPS/AM* | 2000 | 100°C | 0 | ·7.78 | 8.52 | 9.4 | – |
| | | | | 14 | 7.36 | 7.96 | 8.8 | – |
| | | | | 64 | 4.22 | 4.16 | 8.3 | – |
| | | | | 64 | 1.0 | Decomp. | | |
| 23C | do | do | 110°C | 0 | 7.99 | 8.84 | 8.55 | – |
| | | | | 14 | 4.80 | 4.72 | 5.00 | – |
| | | | | 56 | 5.02 | 4.92 | 5.40 | – |
| | | | | 294 | 1.0 | decomp. | | |
| 24C | 70/30 MOLE % AMMPS/AM** | do | 120°C | 0 | – | 11.62 | 14.85 | 17.2 |
| | | | | 17 | – | 7.92 | 8.85 | 9.1 |
| | | | | 56 | – | 1 | Decomp. | |
| 25C | 90/10 MOLE % | 2500 | 120°C | 0 | 5.50 | 5.72 | 5.50 | – |
| | | | | 14 | 5.34 | 5.56 | 5.50 | – |
| | | | | 56 | 4.91 | 4.96 | 4.85 | – |
| | | | | 223 | 1 | Decomp. | | |
| 26 | HOMOPOLYMERIC AMMPS | 2000 | 120°C | 0 | 6.77 | 7.68 | 8.65 | – |
| | | | | 14 | 6.41 | 6.94 | 7.60 | – |
| | | | | 56 | 6.12 | 6.62 | 7.25 | – |
| | | | | 181 | 6.25 | 6.92 | 7.55 | – |

AM = Acrylamide
C = Comparative

EP 0 233 533 B1

EXAMPLE 27

The thermal stability of homopolymeric AMMPS in harsh reservoir brines is shown in Table V, below.

TABLE V

| Brine | Polymer Conc. ppm | Temp | Days | Viscosity mPa.S | | | |
|-------|-------------------|------|------|-----|-----|-----|-----|
| | | | | 60 | 30 | 12 | rpm |
| Synthetic Sea Water | 3000 | 120°C | 0 | 572 | 5.82 | 5.90 | |
| | | | 7 | 5.38 | 5.46 | 5.60 | |
| | | | 36 | 5.09 | 5.16 | 5.30 | |
| | | | 111 | 4.97 | 5.00 | 5.15 | |
| Brine A* | 2300 | 120°C | 0 | 7.44 | 7.84 | 8.00 | |
| | | | 14 | 6.85 | 7.36 | 7.60 | |
| | | | 56 | 6.47 | 7.52 | 6.75 | |
| | | | 132 | 7.3 | 7.60 | 7.85 | |
| | | | 231 | 6.55 | 6.98 | 7.20 | |

\* 1800 ppm tds

189 ppm Ca

91 ppm Mg

## Claims

1. A method for recovering petroleum from a subterranean petroleum-bearing deposit which comprises injecting an aqueous polymer solution into the area of said deposit through at least one input well to cause said petroleum to flow from said area for collection through at least one output well, the improvement which comprises maintaining and controlling the viscosity of said solution by utilizing, in the substantial absence of oxygen, a water-soluble homopolymer of 2-acrylamido-2-methylpropanesulfonic acid or a salt thereof or a copolymer of about 20–99%, by weight, of 2-acrylamido-2-methylpropanesulfonic acid or a salt thereof and about 1–80%, by weight of N,N-dimethylacrylamide, the temperature at the petroleum-bearing deposit being at least 90°C.

2. A method according to Claim 1 wherein said aqueous solution contains a polyvalent salt.

3. A method according to Claim 2 wherein said polyvalent salt is present at a concentration of at least about 100 ppm.

4. A method according to Claim 2 wherein said polyvalent salt is a calcium, iron, or magnesium salt, or mixture thereof.

5. A method according to Claim 1 wherein the temperature at the petroleum-bearing deposit ranges from about 100°C to about 120°C.

6. A method according to Claim 1 wherein the temperature at the petroleum-bearing deposit ranges from about 100°C to about 120°C.

7. A method according to Claim 1 wherein the polymer is a homopolymer of 2-acrylamido-2-methylpropanesulfonic acid or a salt thereof.

8. A method according to Claim 1 wherein the polymer is a copolymer of 2-acrylamido-2-methylpropanesulfonic acid or a salt thereof and N,N-dimethylacrylamide.

## Patentansprüche

1. Verfahren zur Petroleumgewinnung aus einer unterirdischen petroleumhaltigen Lagerstätte, umfassend das Einspritzen einer wäßrigen Polymerlösung in den Bereich der Lagerstätte durch mindestens eine Einlaßbohrung, um zu bewirken, daß das Petroleum aus dem Bereich zur Sammlung durch mindestens eine Auslaßbohrung fließt, wobei die Verbesserung die Aufrechterhaltung und Steuerung der Viskosität der Lösung umfaßt, indem man, im wesentlichen in Abwesenheit von Sauerstoff, ein wasserlösliches Homopolymerisat von 2-Acrylamido-2-methylpropansulfonsäure oder einem Salz derselben oder ein Copolymerisat von etwa 20 bis 99 Gew.-% 2-Acrylamido-2-methylpropansulfonsäure oder einem Salz derselben und etwa 1 bis 80 Gew.-% N,N-Dimethylacrylamid verwendet, wobei die Temperatur bei der petroleumhaltigen Lagerstätte mindestens 90°C beträgt.

2. Verfahren gemäß Anspruch 1, wobei die wäßrige Lösung ein polyvalentes Salz enthält.

3. Verfahren gemäß Anspruch 2, wobei das polyvalente Salz mit einer Konzentration von mindestens etwa 100 ppm vorliegt.

4. Verfahren gemäß Anspruch 2, wobei das polyvalente Salz ein Calcium-, Eisen- oder Magnesiumsalz oder ein Gemisch derselben ist.

5. Verfahren gemäß Anspruch 1, wobei die Temperatur bei der petroleumhaltigen Lagerstätte im Bereich von etwa 100° C bis etwa 120° C liegt.

6. Verfahren gemäß Anspruch 1, wobei die Temperatur bei der petroleumhaltigen Lagerstätte im Bereich von etwa 110° C bis etwa 120° C liegt.

7. Verfahren gemäß Anspruch 1, wobei das Polymere ein Homopolymerisat von 2-Acrylamido-2-methylpropansulfonsäure oder einem Salz derselben ist.

8. Verfahren gemäß Anspruch 1, wobei das Polymere ein Copolymerisat von 2-Acrylamido-2-methylpropansulfonsäure oder einem Salz derselben und N,N-Dimethylacrylamid ist.

## Revendications

1. Procédé pour récupérer du pétrole à partir d'un gisement pétrolifère souterrain, qui consiste à injecter une solution aqueuse de polymère dans la zone dudit gisement par l'intermédiaire d'au moins un puits d'injection pour faire couler ledit pétrole en le déplaçant de ladite zone pour le recueillir par l'intermédiaire d'au moins un puits de production, dont le perfectionnement consiste à maintenir et régler la viscosité de ladite solution en utilisant, en l'absence sensible d'oxygène, un homopolymère hydrosoluble d'acide 2-acrylamino-2-méthylpropane-sulfonique ou d'un sel de celui-ci ou un copolymère d'environ 20 à 99% en poids d'acide 2-acrylamido-2-méthylpropane-sulfonique ou d'un sel de celui-ci et d'environ 1 à 80% en poids de N,N-diméthylacrylamide, la température au niveau du gisement pétrolifère étant d'au moins 90°C.

2. Procédé selon la revendication 1, dans lequel ladite solution aqueuse contient un sel polyvalent.

3. Procédé selon la revendication 2, dans lequel ledit sel polyvalent est présent à une concentration d'au moins environ 100 ppm.

4. Procédé selon la revendication 2, dans lequel ledit sel polyvalent est un sel de calcium, de fer ou de magnésium, ou un mélange de tels sels.

5. Procédé selon la revendication 1, dans lequel la température au niveau du gisement pétrolifère s'établit entre environ 100°C et environ 120°C.

6. Procédé selon la revendication 1, dans lequel la température au niveau du gisement pétrolifère s'établit entre environ 110°C et environ 120°C.

7. Procédé selon la revendication 1, dans lequel le polymère est un homopolymère d'acide 2-acrylamido-2-méthylpropane-sulfonique ou d'un sel de celui-ci.

8. Procédé selon la revendication 1, dans lequel le polymère est un copolymère d'acide 2-acrylamido-2-méthylpropane-sulfonique ou d'un sel de celui-ci avec le N,N-diméthylacrylamide.